# EUROPEAN PATENT APPLICATION

(11) **EP 4 651 024 A1**
(43) Date of publication of application: **19.11.2025**
(21) Application number: 24176069.3
(22) Date of filing: 15.05.2024
(51) Int. Cl.: G06N 3/006, G06N 20/00

(54) **METHOD FOR TRAINING A REINFORCEMENT LEARNING AGENT FOR AN INDUSTRIAL PROCESS SYSTEM AND SYSTEM FOR TRAINING A REINFORCEMENT LEARNING AGENT FOR AN INDUSTRIAL PROCESS SYSTEM**

(71) Applicant: ABB Schweiz AG, 5400 Baden (CH)
(72) Inventor: PATIL, Dinesh, 560016 Bangalore (IN); MUNUSAMY, Sudhakar, 635103 Hosur (IN); KUBAL, Nandkishor, 411033 Pune (IN); BUELOW, Fabian, 68526 Ladenburg (DE); JOSHI, Tanuja, 262501 Pithoragarh (IN)
(74) Representative: Zimmermann & Partner Patentanwälte mbB

(57) **Abstract**

A method for training a reinforcement learning, RL, agent for an industrial process system is provided. The method includes, training the RL agent with plant historical data of the industrial process system, and retraining the RL agent using plant historical data and a low-fidelity simulator of the industrial process system. The retraining the RL agent includes analyzing the plant historical data to identify white spots as regions of process states and dynamic behavior that have not been explored during the training the RL agent, and retraining the RL agent by prioritized exploration with information gained from the white spots and with simulated data provided by simulating the industrial process system with the low-fidelity simulator.

## Description

### Field of the disclosure

The invention is in the field of reinforcement learning agents for industrial process systems. Embodiments of the present application relate to a method for training a reinforcement learning agent for an industrial process system and a system for training a reinforcement learning agent for an industrial process system.

### Technical Background

Reinforcement learning-based control is a promising novel approach to industrial process control. Reinforcement learning agents can be used in industrial process systems. To be used in industrial process systems, the reinforcement learning agents have to be trained for the specific industrial process system. The training of the reinforcement learning agents for an industrial process system is challenging due to multiple reasons.

Due to the high sample complexity, a large number of experiences, that is information on process behavior, is needed during training to achieve a certain level of performance. Further, due to safety and economic concerns the reinforcement learning agent cannot be trained on the actual industrial process system. One solution is to use a high-fidelity process simulator for training the reinforcement learning agent. However, the development of the high-fidelity process simulator demands huge time, monetary, and computational costs. Also, the reinforcement learning agent's performance can be suboptimal due to the inherent mismatches between the model on which training is performed and the actual process and further due to the changing dynamics of industrial process systems. Further, to prevent costly failures and accidents, the agent can only explore a safe region of the industrial process system during the training and during deployment.

There is therefore a need for a more effective method and system for training a reinforcement learning agent for an industrial process system.

This invention addresses these issues, by providing a method for training a reinforcement learning agent for an industrial process system and a system for training a reinforcement learning agent for an industrial process system according to the independent claims.

### Summary of the disclosure

Reference will now be made in detail to the various embodiments of the present disclosure, one or more examples of which are illustrated in the figures. Generally, only the differences with respect to individual embodiments are described. Each example is provided by way of explanation and is not meant as a limitation of the present disclosure. Features illustrated or described as part of one embodiment can be used on or in conjunction with other embodiments to yield yet a further embodiment. It is intended that the description includes such modifications and variations.

Compared to conventional control methods such as proportional-integral-derivative (PID) control, model predictive control (MPC), and advanced process control (APC), reinforcement learning (RL) based control stands out because it can handle complex systems with nonlinear behavior. Its ability to learn from interactions with processes and to optimize diverse objectives distinguishes it as a dynamic solution. Moreover, RL control excels in adapting to evolving operating conditions and disturbances, while significantly reducing the manual modelling and tuning efforts associated with traditional industrial control strategies.

Applying reinforcement learning to industrial process control, e.g. providing a reinforcement learning agent, poses challenges. Sample efficiency is one of the primary challenges for RL agents in industrial process systems, particularly during training and maintenance of the RL agent. RL algorithms traditionally require numerous interactions with the process and/or environment to learn effective policies. It is therefore an objective of the present invention to reduce the number of samples required to train an RL agent for an industrial process and/or to provide samples for training an RL agent more efficiently, particularly to achieve superior performance.

In many industrial settings, training RL agents from scratch in the actual operational environment may be unfeasible and/or unsafe. To achieve the desired accuracy of the RL agent high-fidelity simulators may be used during the training phase. A drawback of high-fidelity simulators is that they are expensive and the execution of these simulators may result in multiple months of training time. Furthermore, many industrial systems feature high-dimensional state and action spaces. Traditional RL algorithms may struggle to navigate such complex environments efficiently. It is therefore an objective of the present invention, to provide a method that can handle continuous and high-dimensional spaces.

Additionally, safety takes precedence as RL agents must not only acquire optimal policies but also comply with stringent safety constraints while demonstrating resilience to environmental variations. A further objective of the present invention is to establish a mechanism for real-time adaptation to evolving conditions over time and ensuring their robustness.

The present invention addresses the above issues and objectives by providing a holistic and systematic approach for training reinforcement learning agents for industrial process systems.

The method according to the present invention provides an accelerated, safe, and resilient training and maintenance framework that forms a pipeline for RL agent development and life cycle management. The RL agent is trained using a combination of historical closed-loop data and a low-fidelity simulator. The RL agent may use multiple low-fidelity simulators. The RL agent may further be adapted to changing processes. Beneficially, the usage of historical data enables sample-efficient training which reduces the amount of interaction either with a simulator or with the actual process. This further results in that the agent is trained in a safe region in state space, as it explores only already experienced regions present in history. Further, a safety verifier and safety guarantor may be provided to beneficially ensure the safety of the process during training and deployment. Advantageously, the low-fidelity simulators with uncertainty considerations bring robustness in the absence of high-fidelity simulators, improve the optimality of the learned policy from historical closed-loop data, and can be used for learning unexplored regions. The adaptive capability is introduced through a monitoring and fine-tuning module which continuously monitors the agent's performance and adjusts the agent's policy to achieve optimal performance.

The method for training an RL agent for an industrial process system according to the present application beneficially improves balancing the tradeoffs between sample efficiency, exploration, safety, realism, and iterative feedback, making RL agent training and maintenance for an industrial process system more effective. The methods and systems according to the present invention provide a structured and efficient methodology for training RL agents for complex and dynamic industrial process systems. Further, the methods and systems according to the present invention provide a facilitator for introducing RL agents into the industrial process control market. Beneficially allowing to streamline the training process, ensuring safe exploration, and enabling adaptation to dynamic conditions.

In light of the above, a method for training a reinforcement learning agent for an industrial process system and a system for training a reinforcement learning agent for an industrial process system is provided. Further aspects, advantages, and features are apparent from the dependent claims, the description, and the accompanying drawings.

According to an aspect, a method for training a reinforcement learning (RL) agent for an industrial process system is provided. The method includes, training the RL agent with plant historical data of the industrial process system, and retraining the RL agent using plant historical data and a low-fidelity simulator of the industrial process system. The retraining the RL agent includes analyzing the plant historical data to identify white spots as regions of process states and dynamic behavior that have not been explored during the training the RL agent, and retraining the RL agent by prioritized exploration with information gained from the white spots and with simulated data provided by simulating the industrial process system with the low-fidelity simulator.

The method is for training a reinforcement learning (RL) agent for an industrial process system. The industrial process system may be an oil refining system, a mining system, a pulp and paper manufacturing system, a cement production system, a power generation system, or any other suitable type of industrial process system. In particular, the industrial process system may be any type of industrial process system that can benefit from an RL agent, particularly from an RL agent controlling operation of the industrial process system.

The method includes the training the RL agent with plant historical data. The method for training the RL agent may be commenced by training the RL agent with plant historical data, also referred to herein as closed-loop historical data. The plant historical data may be collected on a plant, i.e. an industrial process system. The plant historical data may be collected over an extended period of time during which the plant is in operation. The plant historical data may be collected over an operating time of the plant of up to 1 week, 2 weeks, 3 weeks, 4 weeks, 2 months, 6 months, 1 year, 2 years, 5 years, or up to 10 years, or even more. The plant historical data may be collected on the same industrial process system for which the RL agent is trained. The plant historical data may be collected from an industrial process system that is similar to the industrial process system for which the RL agent is trained. For example, a same industrial process system may be replicated multiple times. The RL agent for a newly replicated industrial process system may be trained with plant historical data of an already commissioned and operating industrial process system.

The training the RL agent with plant historical data may be an initial training phase of the RL agent. Training the RL agent with plant historical data advantageously provides the RL agent with valuable insights about the industrial process system. Advantageously, this allows the RL agent to make more informed decisions resulting in more correct decisions early in the training and accelerating the learning process.

The RL agent is retrained using plant historical data and a low-fidelity simulator of the industrial process system. The retraining the RL agent may be done after an initial training phase of the RL agent with plant historical data. Beneficially, the retraining the RL agent allows for improved performance of the RL agent.

The plant historical data is analyzed to identify white spots. The white spots may be identified by meticulous analysis of the plant historical data. White spots are regions of process states and dynamic behavior that have not been explored during the training of the RL agent, particularly during the training the RL agent with the plant historical data. The white spots may correspond to regions of process states and dynamic behavior that have not been experienced in the plant historical data and/or have not been explored during training of the RL agent with plant historical data. The white spots may correspond to regions of process states and dynamic behavior that have only been experienced in limited capacity, or not at all, by the industrial process system from which the plant historical data is taken.

The RL agent trained with the plant historical data may only have limited information, or none at all, regarding the white spots. Beneficially, identifying the white spots allows to gather information about the white spots. The white spots may be made as focal points of RL exploration, particularly to gather information about the process states and dynamic behavior of the white spots. The knowledge about the white spots, that is the existence of the white spots, may be used for retraining the RL agent.

The knowledge about the white spots (prioritized exploration region) gained from the analysis of historical data can be used to plan further training by interacting with low-fidelity simulators. Such training expands the scope of agents for unforeseen situations that are not present in the regular historical data but likely to occur in the future. An RL agent can perform such exploration and experimentation in a less resource-intensive setting, due to the computationally less expensive nature of low-fidelity simulators.

The RL agent is retrained by prioritized exploration with information gained from the white spots and with simulated data provided by simulating the industrial process system with the low-fidelity simulator. The information gained from the white spots and the information from the low-fidelity simulator are combined in a synergistic way to retrain the RL agent. The low-fidelity simulator may provide simulated process environments, particularly simulated process environments that may be different to process environments that have been recorded in the plant historical data.

Throughout this disclosure, a process environment is understood to describe process related attributes of an industrial process system. The process environment may describe an operating state of the industrial process system. The process environment may, for example, include information about type of the industrial process, type and quantity of input products, type and quantity of output products, manufacturing steps, distribution steps, storing of input products, storing of output products, and/or process behavior. Industrial processes are procedures involving chemical, physical, electrical, or mechanical steps to aid in the manufacturing of an item or items, usually carried out on a very large scale. The simulated process environments may be similar and/or different to process environments recorded in the plant historical data. The information about the white spots may then be used to specifically explore the white spots, i.e. the previously unexplored process states and dynamic behavior. The low-fidelity simulator may be fine-tuned to further improve the white spot exploration. The low-fidelity simulator may be fine-tuned to provide higher quality simulations for process states in the vicinity of the white spots. At the same time, the quality of simulation for well known process states may be reduced, for example, for process states already explored with the plant historical data. A total processing power needed for the low-fidelity simulator may thus be kept the same while improving the white spot exploration.

The low-fidelity simulator may be constantly improved and/or adjusted to the industrial process system for which the RL agent is trained. The low-fidelity simulator may be initiated using plant historical data. The plant historical data may be used to fine-tune the parameters of the low-fidelity simulator to ensure the closeness to the actual industrial process system. The low-fidelity simulator may be a first low-fidelity simulator. In some embodiments, the retraining the RL agent may be done using one or more second low-fidelity simulators. The retraining the RL agent by prioritized exploration may be further with information gained from the one or more second low-fidelity simulators. The one or more second low-fidelity simulators may be similar to the first low-fidelity simulator. The one or more second low-fidelity simulators may be different to the first low-fidelity simulator. The one or more second low-fidelity simulators may be fine-tuned to provide high quality simulated data for process states including the white spots and/or process states adjacent to the white spots. The one or more second low-fidelity simulators may provide simulated data for sub-systems of the industrial process systems.

Domain knowledge facilitated through low-fidelity simulators is exploited to ensure the feasibility and effectiveness of the RL white spot exploration. The knowledge gained from white spots is further used in determining the optimal number of agents required and fine-tuning their goals and reward structure to align with the complexity of the specific system. The use of historical data and information on white spots determined during training reduces the amount of search space for a high-dimensional system which can make the training process focused and faster.

The white spots may be identified by meticulous analysis of the plant historical data. The white spots may be identified using variable space exploration. Variable space exploration is a type of data mining process using rules and/or algorithms to analyze the distribution of variable data in the historical data. The white spots may be identified with the help of lower and upper bounds of variables. In some embodiments, analyzing the plant historical data to identify white spots includes retrieving lower bounds for process state variables and/or upper bounds for process state variables, and identifying the white spots by variable space exploration using the lower bounds and/or upper bounds.

In an industrial process system, safety is important to avoid accidents that could result in downtime and even injuring human personnel. A safety verifier and/or a safety guarantor may be provided. Beneficially, the safety verifier and/or the safety guarantor may consistently guarantee the safety of an industrial process system throughout the training and deployment phases of a reinforcement learning agent for the industrial process system.

A safety verifier may be provided. The safety verifier may be based on safety-related variables. The safety-related variables may be correlated to manipulated variables of the industrial process system. The safety verifier may be capable of predicting safety variables based on the current values of manipulated variables. The safety verifier may be constructed using plant historical data and/or information gained during low-fidelity simulation runs. This may be done by inferring dynamics of safety-related variables from plant historical data and/or from exploration strategies during low-fidelity simulation runs. Beneficially, this approach allows to unravel the relationship between safety variables and manipulated variables.

Manipulated variables may be variables of the industrial process system. The manipulated variables may be active variables that can be actively manipulated to manipulate an operation of the industrial process system. The manipulated variables may be passive variables that are dependent on other variables of the industrial process system, e.g. dependent on active variables and/or further passive variables of the industrial process system.

The safety verifier may monitor some, or all, manipulated variables of the industrial process system. The manipulated variables may be correlated by the safety verifier to safety-related variables. One or more manipulated variables may be correlated by the safety verifier to one safety related variable. A same manipulated variable may be correlated to one or more safety related variable. The safety verifier may determine safety-related variables based on the manipulated variables.

The safety verifier may be provided with safety constraints. The safety constraints may comprise safety parameters that are associated with safety variables. The safety constraints, particularly the safety parameters, may be pre-determined. The safety constraints, particularly the safety parameters, may be dependent on the industrial process system for which the reinforcement learning agent is trained. The safety parameters may define a safety range for the associated safety variables. The safety variable may be safe within the safety range and/or unsafe outside of the safety range. The safety parameters may define an upper limit below which the associated safety variable is safe and/or a lower limit above which the associated safety variable is safe.

The safety verifier may be configured to determine a safe or unsafe operation of the industrial process system based on the manipulated variables and the safety constraints, particularly based on the safety variables and the safety parameters. The safety verifier may monitor manipulated variables and determine correlated safety variables. The safety verifier may compare safety parameters and associated safety variables. A safety variable may be flagged safe when the safety variable is within a safety range defined by the associated safety parameter. The safety variable may be flagged unsafe when the safety variable is outside of the safety range. The industrial process system may be in a safe operating state if no safety variable is flagged unsafe, particularly if all safety variables are flagged safe. The industrial process system may be in an unsafe operating state if one or more safety variables are flagged unsafe. The safety verifier may adjust the manipulated variables to ensure compliance with safety constraints. The safety verifier may monitor and adjust the manipulated variables before the corresponding safety variable is flagged unsafe. The safety verifier may adjust the manipulated variables after the corresponding safety variable is flagged unsafe, particularly adjust the manipulated variable such that the corresponding safety variable is flagged safe. Beneficially, the safety verifier consistently ensures the RL agent's adherence to safety constraints both during training and during agent deployment.

According to an embodiment that can be combined with other embodiments described herein, the method includes inferring dynamics of safety-related variables from plant historical data and/or by the prioritized exploration; and leveraging the dynamics of the safety-related variables to construct a safety verifier configured to predict safety variables based on values of manipulated variables. Further, predicted safety variables may be compared to pre-determined safety constraints, and values of the manipulated variables may be adjusted to ensure compliance of the safety variables with the safety constraints.

A safety guarantor may be provided. The safety guarantor may be provided in addition to the safety verifier. The safety guarantor may be provided as a failsafe for the safety verifier. The safety guarantor may come into effect in the event of failure of the safety verifier. For example, the safety verifier may experience a failure due to insufficient learning of the relation between manipulated variables and safety variables. The safety guarantor may come into effect when one or more safety variables are flagged unsafe. For example, the safety guarantor may come into effect if more than a pre-determined amount of safety variables are flagged unsafe, to avoid a failure by overload of the safety verifier. The safety guarantor may manipulate the industrial process system to a predefined safe state. That is, the safety guarantor may bring the industrial process system into the predefined safe state. Beneficially, the safety guarantor may ensure to avoid a costly shutdown. The safety guarantor along with the safety verifier ensures the safety of the process. According to an embodiment, in the event of failure of the safety verifier due to insufficient learning and/or non-compliance of the safety variable with the safety constraints, the industrial process system is manipulated to a predefined safe state by a safety guarantor.

The RL agent for the industrial process system may be fine-tuned to improve a performance of the RL agent. The RL agent trained with plant historical data and on a low-fidelity simulator may be fine-tuned using a high-fidelity simulator and/or by interacting with the actual industrial process system, i.e. the industrial process system for which the RL agent is trained. Fine tuning by interacting with the actual process beneficially allows to learn policies which bridge the gap between simulation and reality. Prior to fine tuning the RL agent by interacting with the actual industrial process system the RL agent may be deployed to the industrial process system. The fine-tuning the RL agent may be carried out after deployment of the trained RL agent to the industrial process system.

The RL agent trained with plant historical data and on a low-fidelity simulator has already gained knowledge of the industrial process system. Advantageously, this knowledge can be leveraged to streamline fine tuning. The fine tuning may be computationally lean and safer. An interaction of the RL agent with the computationally extensive high-fidelity simulator may be reduced when compared to training the RL agent directly using the high-fidelity simulator. Further, the RL agent already having knowledge of the industrial process system can ensure improved safety when interacting with the actual industrial process system. The safety can be further improved when providing a safety verifier and/or a safety guarantor. In some embodiments, a machine-learning-based surrogate model created from high-fidelity simulation data and plant historical data can be used to speed up the fine tuning. This can help to overcome CPU-time restrictions.

According to an embodiment, that can be combined with other embodiments described herein the method includes fine tuning the RL agent by using a high-fidelity simulator, by interacting of the RL agent with the industrial process system, by using plant historical data, or by a combination thereof.

After training the RL agent using plant historical data and the low-fidelity simulator, and potentially fine tuning, the RL agent may be deployed. The RL agent may be deployed to the industrial process system for which the RL agent has been trained. The RL agent may be deployed to more than one industrial process system. The RL agent may be trained for a first industrial process system. The RL agent may be deployed to the first industrial process system and/or to one or more second industrial process systems. The one or more second industrial process systems may be similar and/or identical to the first industrial process system, i.e. the one or more second industrial process systems may be replicates of the first industrial process system. For example, the one or more second industrial process system may be of the same type as the first industrial process system. The first industrial process system and the one or more second industrial process systems may be installed in a same factory or location. The first industrial process system and the one or more second industrial process systems may be installed in different factories or locations. According to an embodiment, which can be combined with other embodiments described herein, the method includes deploying the RL agent to the industrial process system.

After deploying the RL agent to the industrial process system, the RL agent may be continuously monitored. The performance and behavior of the RL agent deployed to an industrial process system may be continuously monitored by collecting historical data, by collecting rewards, and by analyzing interactions of the RL agent continuously. The RL agent policy can be refined by adjusting policy parameters, i.e. fine tuning of the RL agent, and/or exploring new actions. The policy parameters may be refined after monitoring the RL agent for a pre-determined period of time. Modified policy parameters may be obtained based on the monitored performance and/or behavior of the RL agent. The modified policy parameters may be directly applied to the RL agent deployed in the industrial process system, i.e. rolled out into the industrial process system. Preferably, the obtained modified policy parameters are subjected to offline validation using the collected historical data to evaluate the impact of the modified policy parameter on the performance. In the case that the modified policy parameters pass validation, the modified policy parameters may be applied to the RL agent deployed in the industrial process system, particularly the modified policy parameters may be systematically rolled out into the industrial process system. This iterative feedback loop may be periodically repeated to ensure the continuous enhancement of the RL agent's performance.

According to an embodiment, that can be combined with other embodiments described herein, the method includes fine tuning an RL agent policy by iteratively performing the steps of monitoring a performance and behavior of the RL agent by collecting historical data and rewards, analyzing the performance and behavior of the RL agent, fine tuning the RL agent policy by adjusting policy parameters and exploring new actions to get an updated RL agent policy, subjecting the updated RL agent policy to offline validation using the collected historical data to evaluate its impact on the performance because of policy alterations, and upon determining that the updated RL agent policy pass the validation, systematically rolling out the updated RL agent policy to the industrial process.

According to an aspect, a system for training a reinforcement learning, RL, agent for an industrial process system is provided. The system includes a data storage medium configured for storing plant historical data of the industrial process system, and a low-fidelity simulator of the industrial process system.

The system for training a reinforcement learning (RL) agent for an industrial process system may be configured for carrying out the method for training an RL agent as described herein. The components of the system, for example the low-fidelity simulator, may be the components described in respect of the method for training an RL agent as described herein. The data storage medium may store plant historical data of the industrial process system for which the RL agent is trained. The system may include one or more second low-fidelity simulators. According to an embodiment, which can be combined with other embodiments described herein, the system comprises a computer-implemented medium storing instructions, that when executed cause the system for training an RL agent to carry out a method of training an RL agent according to the present invention. The system may include a training module configured to train an RL agent according to a method of the present invention. The training module may cause the system for training a reinforcement learning (RL) agent to perform the steps of the method of training an RL agent as described herein. The training module may have a controller or the training module may be a controller. The controller may be configured to cause the system for training a reinforcement learning (RL) agent to perform the steps of the method of training an RL agent as described herein.

In some embodiments, the system includes a safety verifier configured to predict safety variables based on values of manipulated variables. The system may further include a safety guarantor configured to manipulate the industrial process system to a predefined safe state in the event of a failure of the safety verifier. The safety verifier and/or the safety guarantor may be configured as described herein. According to an embodiment the system includes a high-fidelity simulator of the industrial process system.

Those skilled in the art will recognise additional features and advantages upon reading the following detailed description, and upon viewing the accompanying drawings.

### Brief description of the drawings

So that the manner in which the above recited features of the present disclosure can be understood in detail, a more particular description of the disclosure, briefly summarized above, may be had by reference to embodiments. The accompanying drawings relate to embodiments of the disclosure and are described in the following:
Fig. 1 is a schematic illustration of a method for training a reinforcement learning agent for an industrial process system.
Fig. 2 is a schematic illustration of a system for training a reinforcement learning agent for an industrial process system.
Fig. 3 is a schematic illustration of a system for training a reinforcement learning agent for an industrial process system.

### Detailed description of the drawings

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

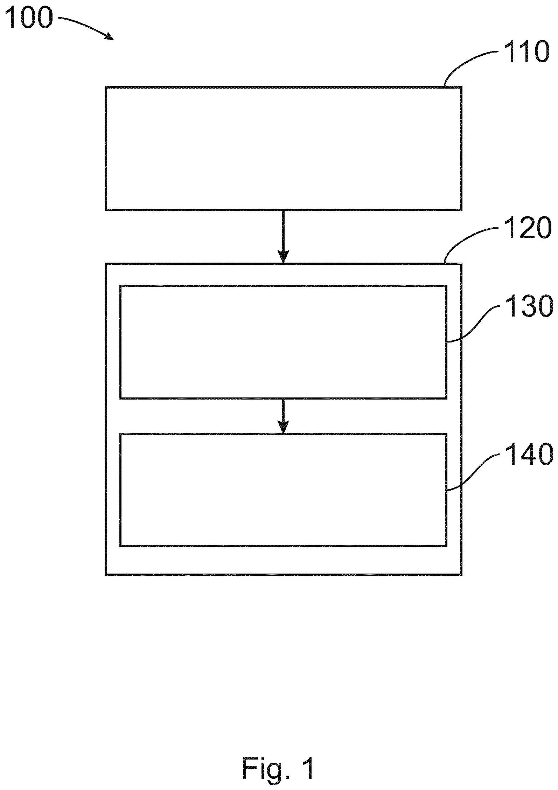

Fig. 1 is schematic illustration of a method 100 for training a reinforcement learning (RL) agent for an industrial process system.

At step 110, the RL agent is trained with plant historical data of the industrial process system.

At step 120, the RL agent is retrained using plant historical data and a low-fidelity simulator of the industrial process system. The retraining the RL agent is done in steps 130 and 140.

At step 130, the plant historical data is analyzed to identify white spots as regions of process states and dynamic behavior that have not been explored during the training the RL agent. The analyzing the plant historical data to identify white spots may include retrieving lower bounds for process state variables and/or upper bounds for process state variables, and identifying the white spots by variable space exploration using the lower bounds and/or upper bounds.

At step 140, the RL agent is retrained by prioritized exploration with information gained from the white spots and with simulated data provided by simulating the industrial process system with the low-fidelity simulator.

Optionally, a safety verifier may be constructed for training the RL agent. Dynamics of safety-related variables may be inferred from plant historical data and/or by the prioritized exploration. The dynamics of the safety-related variables may be leveraged to construct a safety verifier configured to predict safety variables based on values of manipulated variables. Further, predicted safety variables may be compared to pre-determined safety constraints, and values of the manipulated variables may be adjusted to ensure compliance of the safety variables with the safety constraints. In the event of failure of the safety verifier due to insufficient learning and/or non-compliance of the safety variable with the safety constraints, the industrial process system may be manipulated to a predefined safe state by a safety guarantor.

The RL agent may be fine-tuned by using a high-fidelity simulator, by interacting the RL agent with the industrial process system, by using plant historical data, or by a combination thereof. Further, an RL agent policy may be fine-tuned by iteratively performing the steps of monitoring the performance and behavior of the RL agent by collecting historical data and rewards, analyzing the performance and behavior of the RL agent, fine tuning the RL agent policy by adjusting policy parameters and exploring new actions to get an updated RL agent policy, subjecting the updated RL agent policy to offline validation using the collected historical data to evaluate its impact on the performance because of policy alterations, and upon determining that the updated RL agent policy pass the validation, systematically rolling out the updated RL agent policy to the industrial process.

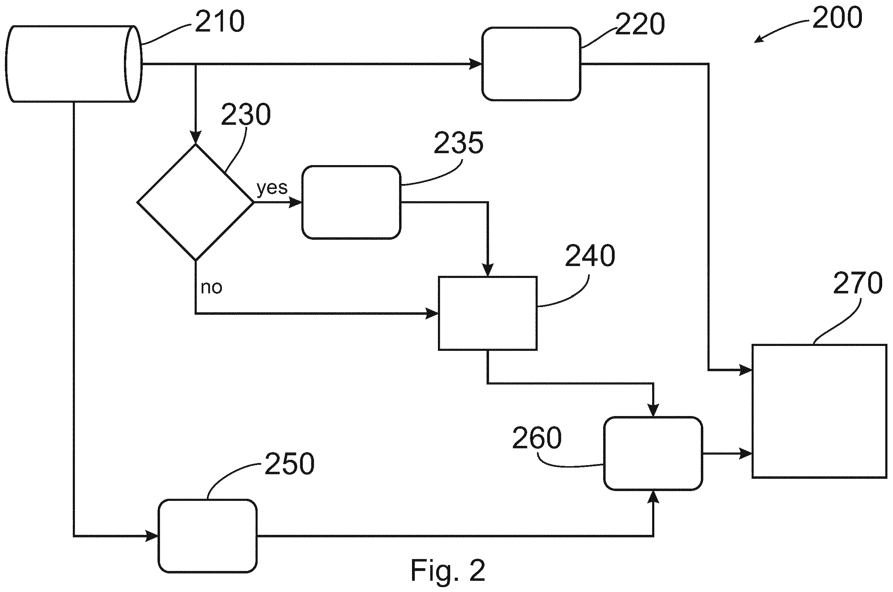

Fig. 2 is schematic illustration of a system 200 for training a reinforcement learning (RL) agent 270. Fig. 2 further illustrate a flow diagram for training an RL agent according to embodiments described herein. A data storage medium 210 is provided, the data storage medium is configured for storing plant historical data. The RL agent may be trained 220 with plant historical data of the industrial process system. Further, the plant historical data may be analyzed 250 to identify white spots.

The system 200 comprises a low-fidelity simulator 240. The low-fidelity simulator may be constructed using plant historical data. The plant historical data may be used to fine-tune the parameters of the low-fidelity simulator 240 to ensure the closeness to the actual industrial process system. Before the plant historical data is provided to the low-fidelity simulator 240, it may be determined 230 whether tuning of the low-fidelity simulator 240 is required. If tuning is required, the low-fidelity simulator 240 may be fine-tuned, particularly using the plant historical data. The plant historical data may be provided to low-fidelity simulator.

The RL agent is retrained by prioritized exploration 260 with information gained from the white spots and with simulated data provided by the low-fidelity simulator 240. The low-fidelity simulator 240 may provide simulated data based upon plant historical data. The low-fidelity simulator 240 may simulate the industrial process, particularly by using plant historical data received from the data storage medium 210.

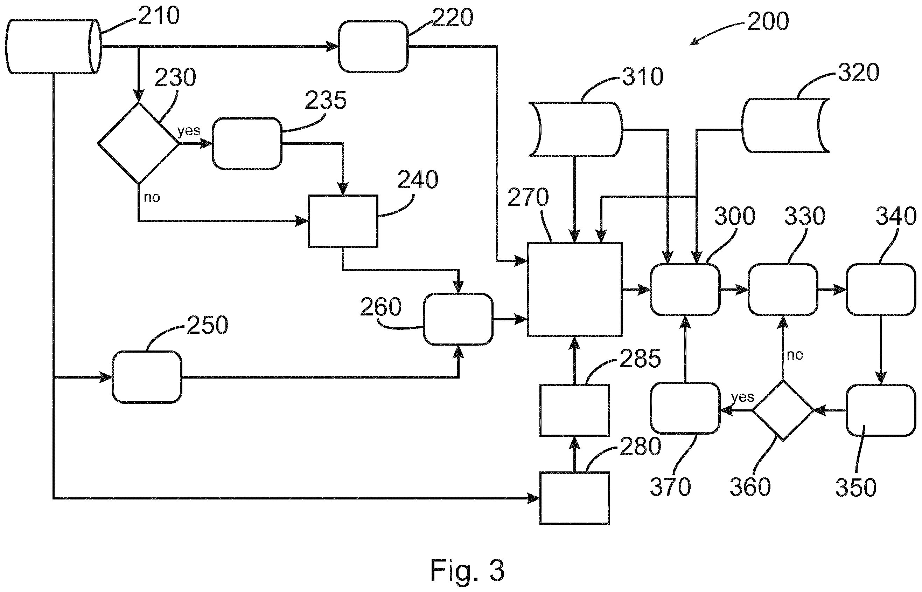

Fig. 3 is a schematic illustration of the system 200 for training the RL agent 270. The system 200 further comprises a safety verifier 280 and a safety guarantor 285. The safety verifier 280 may be configured to determine a safe or unsafe operation of the industrial process system based on manipulated variables of the industrial process system and safety constraints of the industrial process system. The safety guarantor 285 may be provided in addition to the safety verifier 280. The safety guarantor 285 may be provided as a failsafe for the safety verifier. The safety guarantor may come into effect in the event of failure of the safety verifier.

The RL agent 270 trained with plant historical data and on a low-fidelity simulator may be fine-tuned using a high-fidelity simulator 310 and/or by interacting 320 with the actual industrial process system, i.e. the industrial process system for which the RL agent is trained. The RL agent 270 may be deployed 300 to the industrial process system. The deployed RL agent 300 may be fine-tuned using the high-fidelity simulator 310 and/or by interaction 320 with the industrial process system.

The deployed RL agent 300 may further be fine-tuned by fine tuning an RL agent policy. The RL agent policy may be fine-tuned by iteratively monitoring 330 a performance and behavior of the RL agent, analyzing 340 the performance and behavior of the RL agent, fine tuning 350 the RL agent policy by adjusting policy parameters and exploring new actions, subjecting 360 the updated RL agent policy to offline validation using the collected historical data to evaluate its impact on the performance because of policy alterations, and upon determining that the updated RL agent policy pass the validation, systematically rolling out 370 the updated RL agent policy to the industrial process. If it is determined that the updated RL agent policy did not pass validation, the process of fine tuning the RL agent policy may be referred back to the step of monitoring 330 a performance and behavior of the RL agent. This may be done as often as needed, for example, until the updated RL agent policy passes validation. The fine tuning the RL agent policy may be done continuously and/or after pre-determined time intervals during the deployment time of the RL agent.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

While the foregoing is directed to embodiments, other and further embodiments may be devised without departing from the basic scope, and the scope is determined by the claims that follow.

## Claims

1. A method for training a reinforcement learning, RL, agent for an industrial process system, the method comprising:
training the RL agent with plant historical data of the industrial process system; and
retraining the RL agent using plant historical data and a low-fidelity simulator of the industrial process system, the retraining the RL agent comprising:
analyzing the plant historical data to identify white spots as regions of process states and dynamic behavior that have not been explored during the training the RL agent; and
retraining the RL agent by prioritized exploration with information gained from the white spots and with simulated data provided by simulating the industrial process system with the low-fidelity simulator.

2. The method of claim 1, wherein the analyzing the plant historical data to identify white spots comprises:
retrieving lower bounds for process state variables and/or upper bounds for process state variables; and
identifying the white spots by variable space exploration using the lower bounds and/or upper bounds.

3. The method of any one of claims 1 through 2, comprising:
inferring dynamics of safety-related variables from plant historical data and/or by the prioritized exploration; and
leveraging the dynamics of the safety-related variables to construct a safety verifier configured to predict safety variables based on values of manipulated variables.

4. The method of claim 3, comprising:
comparing predicted safety variables to pre-determined safety constraints; and
adjusting values of the manipulated variables to ensure compliance of the safety variables with the safety constraints.

5. The method of any one of claims 3 and 4, wherein in the event of failure of the safety verifier due to insufficient learning and/or non-compliance of the safety variable with the safety constraints, the industrial process system is manipulated to a predefined safe state by a safety guarantor.

6. The method of any one of claims 1 through 5, comprising fine tuning the RL agent by using a high-fidelity simulator, by interacting of the RL agent with the industrial process system, by using plant historical data, or by a combination thereof.

7. The method of any one of claims 1 through 6, comprising deploying the RL agent to the industrial process system.

8. The method of claim 7, comprising fine tuning an RL agent policy by iteratively performing the steps of:
monitoring a performance and behavior of the RL agent by collecting historical data and rewards;
analyzing the performance and behavior of the RL agent;
fine tuning the RL agent policy by adjusting policy parameters and exploring new actions to get an updated RL agent policy;
subjecting the updated RL agent policy to offline validation using the collected historical data to evaluate its impact on the performance because of policy alterations; and
upon determining that the updated RL agent policy pass the validation, systematically rolling out the updated RL agent policy to the industrial process.

9. A system for training a reinforcement learning, RL, agent for an industrial process system, the system comprising:
a data storage medium configured for storing plant historical data of the industrial process system; and
a low-fidelity simulator of the industrial process system.

10. The system of claim 9, comprising a safety verifier configured to predict safety variables based on values of manipulated variables, particularly comprising a safety guarantor configured to manipulate the industrial process system to a predefined safe state in the event of a failure of the safety verifier.

11. The system of any one of claims 9 and 10, comprising a high-fidelity simulator of the industrial process system.

12. The system of any one of claims 9 through 11, comprising a training module configured to train an RL agent according to any one of claims 1 through 8.
